# EUROPÄISCHE PATENTSCHRIFT

(11) **EP 2 441 600 B1**
(45) Veröffentlichungstag und Bekanntmachung des Hinweises auf die Patenterteilung: **17.10.2012**
(21) Anmeldenummer: 11182961.0
(22) Anmeldetag: 27.09.2011
(51) Int. Cl.: B60C 27/10

(54) **Spannvorrichtung für eine Gleitschutzkette**
Tension device for a slide protection chain
Dispositif de serrage pour une chaîne antidérapante

(30) Priorität: 14.10.2010 AT 17142010
(43) Veröffentlichungstag der Anmeldung: 18.04.2012
(73) Patentinhaber: Pewag Schneeketten GmbH & Co KG, 8020 Graz (AT)
(72) Erfinder: Pengg, Ägyd, 9020 Klagenfurt (AT); Grossauer, Georg, 8530 Deutschlandsberg (AT)
(74) Vertreter: Patentanwaltskanzlei Matschnig & Forsthuber OG

(56) Entgegenhaltungen:
- EP-A1- 1 935 674
- WO-A1-2005/095129
- DE-A1- 19 708 756
- US-A1- 2009 084 479

## Beschreibung

Die Erfindung betrifft eine Spannvorrichtung für eine Gleitschutzkette, mit einem Gehäuse, einem Wickelrad und einer diesem zugeordneten Sperrklinke; dabei ist das Wickelrad innerhalb des Gehäuses um seine Achse drehbar gelagert und in Aufwickelrichtung vorgespannt ist; es weist einen Zahnkranz mit einer entlang seinem Umfang angeordneten Zahnung auf; ein durch eine Gehäuseöffnung in das Gehäuse einziehbarer Spannstrang ist an das Wickelrad anschließbar, wobei die Sperrklinke in einer ersten Stellung eine Umdrehbewegung des Wickelrads in Spannrichtung durch Eingreifen der Sperrklinke in die Zahnung des Zahnkranzes blockiert,

Spannvorrichtungen werden bei Gleitschutzketten, insbesondere Schneeketten, verwendet, um nach der Montage ein unerwünschtes Abspulen des Spannstranges zu vermeiden. Der Spannstrang ist zumeist ein Spannseil, kann jedoch auch z.B. als Spannkette ausgebildet sein. Die hier betrachteten Spannvorrichtungen werden in erster Linie bei Lastkraftwagen oder Schwerfahrzeugen verwendet, sind jedoch grundsätzlich bei jeder Art von Fahrzeugen mit Rädern einsetzbar.

Die EP 1935 674 A1 der Anmelderin zeigt eine Spannvorrichtung der eingangs genannten Art. Ein durch eine Gehäuseöffnung in das Gehäuse einziehbarer Spannstrang ist innerhalb des Gehäuses an eine in Aufwickelrichtung vorgespannte und um ihre Achse drehbar gelagerte Wickelrolle angeschlossen. Die Wickelrolle weist einen drehfest verbundenen Zahnkranz auf, in die eine Klinke eingreift und je nach Stellung der Klinke die Bewegung des Zahnkranzes entweder in Aufwickelrichtung oder in die Gegenrichtung dazu blockiert.

Bei diesen Spannvorrichtungen hat sich gezeigt, dass die Gleitschutzkette auf dem Fahrzeugrad zu Beschädigungen führen kann, wenn die Kette zu stramm auf dem Rad montiert ist. Beispielsweise, wenn die Gleitschutzkette um das Rad wandert - was besonders bei höheren Geschwindigkeiten vorkommt -, kann diese Bewegung einer fest anliegenden Kette zu Scheuern und Beschädigung des Reifens führen. Dies ist insbesondere bei den Reifen von Lastkraftwagen der Fall, da dort wegen der größeren Dimensionen und größerem Gewicht der Reifen und der stärkeren Belastung diese Probleme im Vergleich zu PKW-Gleitschutz/Schneeketten deutlich verstärkt auftreten. Andererseits soll die Kette im auf dem Rad montierten Zustand mit einer gewissen Kraft gehalten werden, damit die Kette auf dem Rad gut sitzt und nicht seitlich verrutschen kann.

Es ist daher eine Aufgabe der Erfindung, eine Spannvorrichtung zu schaffen, die die genannten Nachteile überwindet. Insbesondere soll ein gewisses Spiel bei dem Festziehen der Kette ermöglicht werden.

Die gestellte Aufgabe wird von einer Spannvorrichtung der eingangs genannten Art gelöst, bei welcher erfindungsgemäß auf dem Umfang des Zahnkranzes des Wickelrads zumindest ein Bereich ausgebildet ist, der frei von einer Zahnung ist und zwischen daran anschließenden Zahnungen liegt.

Diese Lösung erfüllt die gestellte Aufgabe auf einfache und doch effektive Weise. Aufgrund der zahnungsfreien Abschnitte kann das Wickelrad auch im Blockierzustand um einen gewissen Betrag nachgeben, der ungefähr der Länge des Abschnitts entspricht. Sobald die Klinke im Laufe dieses Nachgebens einen gezähnten Abschnitt erreicht, wird eine weitere Drehung des Wickelrads und somit ein weiteres Nachgeben in Spannrichtung blockiert. Im Ergebnis kann die Gleitschutzkette in größeren Schritten gespannt werden, als es einer einzelnen Zahnungsteilung entsprechen würde. Auf diese Weise ergibt sich ein vergrößertes Spiel beim Spannen der Kette, und es ist gewährleistet, dass die Gleitschutzkette ausreichend locker auf dem Reifen sitzt, ohne Schaden zu verursachen. Zudem ergibt das geringfügige Durchhängen der Kette einen Selbstreinigungseffekt gegenüber Verschmutzungen durch Matsch, Schnee od.dgl. aufgrund der Beweglichkeit der Kette.

In einer vorteilhaften Weiterbildung der Erfindung wechseln sich gezähnte und zahnungsfreie Bereiche ab, sodass der der Zahnkranz auf seinem Umfang zumindest zwei zahnungsfreie Bereiche - z.B. drei, vier, fünf oder sechs - aufweist, die eine gleiche Anzahl von Bereichen trennen, die jeweils eine gleichbleibende Anzahl von Zahnungsteilungen aufweisen.

Um ein einfaches Entsperren der Seilblockierung bei der Montage der Gleitschutzkette zu ermöglichen, kann ein von außen zugängliches Betätigungsglied vorgesehen sein, welches über einen Arm auf die Sperrklinke wirkt, wobei der Arm des Betätigungsglieds über eine gelenkige Verbindung mit der Sperrklinke angekoppelt ist. Dies ermöglicht eine Bewegung der Sperrklinke zwischen der ersten Stellung, in der sie eine Umdrehbewegung des Wickelrads in Spannrichtung blockiert, und einer zweiten Stellung, in der diese Bewegung freigegeben ist. Dabei kann sich der Arm außerhalb des Wickelrads entlang einer um das Wickelrad verlaufenden Richtung erstrecken und (in Richtung der Achse des Wickelrads gesehen) unterhalb der Sperrklinke angeordnet sein. Die gelenkige Verbindung ist z.B. eine Zapfenverbindung, die durch eine Öffnung und einen in diese Öffnung eingreifenden Zapfen gebildet ist, die auf dem Arm bzw. der Sperrklinke vorgesehen sind.

Alternativ dazu kann das Betätigungsglied an einer Innenseite zwei Stoppflächen aufweisen, die mit einem Arm der Sperrklinke zusammenwirken, der sich zwischen den zwei Stoppflächen befindet und je nach Bewegung des Betätigungsglieds von den Stoppflächen kippbar ist, wobei infolge dieser Kippbewegung die Sperrklinke zwischen der ersten Stellung und der zweiten Stellung (worin die Bewegung in Spannrichtung blockiert bzw. freigegeben ist) bewegbar ist.

Zur weiteren Vereinfachung der Montage kann die zweite Stellung der Sperrklinke ein zu weitgehendes Einziehen des Spannstrangs blockieren, indem die Sperrklinke in der zweiten Stellung ebenfalls auf den Zahnkranz wirkt, jedoch eine Umdrehbewegung des Wickelrads in Aufwickelrichtung durch Eingreifen der Sperrklinke in die Zahnung blockiert.

Zudem kann eine Dämpfungseinrichtung vorgesehen sein, die ein mit dem Wickelrad getriebemäßig verbundenes Radelement aufweist, das seiner Drehung, zumindest in einer Aufwickelrichtung des Wickelrads entsprechenden Richtung, eine Bremswirkung entgegensetzt, wobei das Radelement vorzugsweise ein Zahnrad ist, das mit einem Zahnradkranz, insbesondere Innenzahnkranz, des Wickelrads zusammenwirkt.

Außerdem ist es günstig, wenn die Spannvorrichtung mit an dem Gehäuse angeordneten Halteelementen, insbesondere Haken, versehen ist; mit diesen Befestigungsmitteln kann die Spannvorrichtung an einem Außenstrang der Gleitschutzkette unverschieblich befestigt werden. Die Verwendung von Haken erleichtert zudem die Befestigung, indem die Spannvorrichtung einfach auf Kettenglieder des Außenstrangs eingehängt werden kann.

Die Erfindung samt ihren Vorzügen und vorteilhaften Ausgestaltungen wird im Folgenden anhand nicht einschränkender Ausführungsbeispiele für erfindungsgemäße Spannvorrichtungen näher erläutert, die in einer Gleitschutzkette für z.B. LKWs zum Einsatz kommen und in den beigefügten Zeichnungen dargestellt sind. Die Figuren zeigen
- Fig. 1: eine Spannvorrichtung gemäß einem ersten Ausführungsbeispiel in eröffnetem Zustand (nämlich mit abgenommenem Deckel) in erster Blockierstellung,
- Fig. 2: die geöffnete Spannvorrichtung der Fig. 1 in zweiter Blockierstellung,
- Fig. 3: die Spannvorrichtung der Fig. 1 in explodierter Darstellung,
- Fig.4: eine Detailansicht der Sperrklinke und des Betätigungsknopfes der Spann-vorrichtung der Fig. 1 und 3,
- Fig. 5: eine Ansicht der Sperrklinke der Fig. 4 der äußere Seite,
- Fig. 6: eine Darstellung einer auf einen Reifen montierten Gleitschutzkette mit der Spann-vorrichtung des Ausführungsbeispiels,
- Fig. 7a und 7b: je eine perspektivische Ansicht und eine Seitenansicht des Umlenkhakens der Gleitschutzkette der Fig. 6, und
- Fig. 8a und 8b: je eine perspektivische Ansicht und eine Seitenansicht eines Führungsha-kens der Gleitschutzkette der Fig. 6,
- Fig. 9: eine Spannvorrichtung gemäß einem zweiten Ausführungsbeispiel in eröffnetem Zustand in erster Blockierstellung,
- Fig. 10: die Spannvorrichtung der Fig. 9 in explodierter Darstellung,
- Fig. 11a und 11b: die Sperrklinke der Spannvorrichtung der Fig. 9 und 10 in je einer Ansicht der inneren und der äußeren Seite
- Fig. 12: die erste Blockierstellung der Spannvorrichtung der Fig. 9 und 10, illustriert anhand des Zusammenspiels Sperrklinke und Winkelrad, und
- Fig. 13: die zweite Blockierstellung der Spannvorrichtung der Fig. 9 und 10 in einer der Fig. 12 analogen Darstellung.

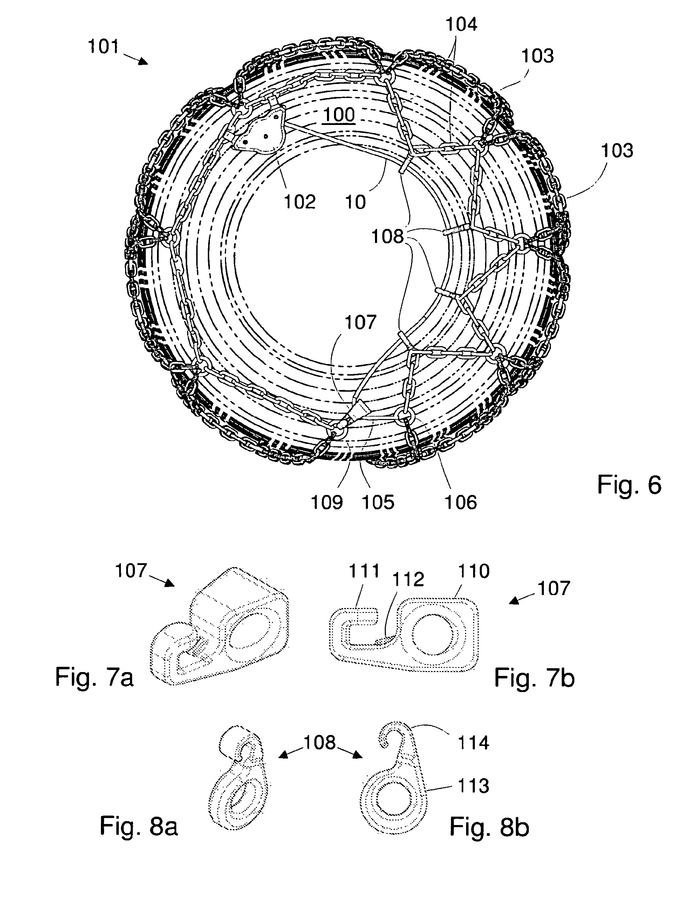

Eine Gleitschutzkette 101, die mit einer Spannvorrichtung 102 gemäß den untenstehend diskutierten Ausführungsbeispielen arbeitet, ist in Fig. 6 in auf einem Reifen 100 aufgezogenem Zustand dargestellt. Die Spurkreuze 103 der Kette 101 sind seitlich durch eine Außenkette 104 begrenzt und gehalten. Zur Sicherung der Kette 101 nach dem Aufziehen auf dem Reifen wird die Außenkette 104 an ihren Enden unter Verwendung eines Spannseiles 10 geschlossen. Das Spannseil 10 ist an einem ersten Ende, dem Endstück 105, an einem Ende der Außenkette 104 befestigt, beispielsweise an einem Endring 106 der Außenkette eingehängt; ein zweites Ende des Spannseils 10 ist in der Spannvorrichtung 102 gehalten, die wiederum an der Außenkette 104 - typischerweise in einem Bereich, der auf dem Reifen dem Ende der Außenkette gegenüber liegt - befestigt ist. Das Spannseil 10 ist typischer Weise ein Stahlseil, jedoch kann es streckenweise als Kette realisiert sein; z.B. kann das Endstück 105 des Spannseils als Kette mit einem Endhaken (nicht gezeigt) ausgebildet sein, wobei der Endhaken in den Endring 106 der Außenkette eingehängt wird. Das Spannseil 10 dient dem Zusammenziehen der Außenkette 104. Hierzu ist auf dem Endstück 105 des Spannseils ein Umlenkhaken 107 vorgesehen, während das Spannseil 10 mithilfe einiger Führungsringe 108 an den vor dem Endring 106 liegenden Abschnitten des Außenstrangs angebunden (und zugleich um die Radmitte herumgeführt) ist. Letzterer dient dem Schließen der Kette 101 auf dem Reifen, was durch Einhängen des Umlenkhakens am gegenüber liegenden Ende 109 der Außenkette, etwa auf einem Kettenglied oder vorzugsweise Ring, erreicht wird. Durch die Zugwirkung der Spannvorrichtung 1 werden die Enden des Außenstrangs zueinander gezogen, wodurch die Kette 101 in der gewünschten Weise auf der Reifenfläche ausgebreitet wird und die Spurkreuze 103 auf der Reifen-Lauffläche entfaltet werden.

Das Spannseil 10 dient dem Zusammenziehen der Außenkette 104 und Spannen der Kette 101 auf dem Reifen 100 unmittelbar nach dem Aufziehen der Kette. Hierzu ist das Spannseil 10 mithilfe einiger Führungsringe 108 an den vor dem Endring 106 liegenden Abschnitten des Außenstrangs angebunden und auf diese Weise um die Radmitte herumgeführt, und auf dem Endstück 105 des Spannseils ist ein Umlenkhaken 107 vorgesehen.

Fig. 7a und 7b illustrieren beispielhaft eine Ausführung des Umlenkhakens 107, mit dem das Spannseil 10 an das gegenüber liegende Ende 109 der Außenkette 104 angekoppelt wird. Der Umlenkhaken 107 ist z.B. als einstückiger Bauteil aus glasfaserverstärktem Kunststoff ausgebildet und weist einen ringartigen Körper 110 mit einem Auge auf, durch welches das Spannseil geführt wird, sowie einen am Körper 110 angeordneten Hakenteil 111, mit dem der Umlenkhaken 107 in das Außenkettenende 109 eingehängt werden kann. Am Ansatz des Hakenteils 111 ist ein Vorsprung 112, z.B. in Form einer flachen Nase, vorgesehen. Dieser bewirkt, dass der Ring (oder das Kettenglied), auf dem der Haken aufgehängt wird, in dem Hakenteil 111 einschnappt und verhindert, dass der Umlenkhaken 107 sich von dem Ende 109 löst, wenn der Zug durch das Spannseil nachlassen sollte.

Fig. 8a und 8b illustrieren beispielhaft eine Ausführung der Führungsringe 108. In einem Ringkörper 113 der Führungsring 108 ist ein Auge ausgebildet, durch welches das Spannseil geführt ist und ein am Ringkörper 113 angeordnetes Hakenelement 114 ermöglicht das Einhängen am Außenstrang 104 (vgl. Fig. 6). Der Führungsring 108 ist vorzugsweise als einstückiger Bauteil aus glasfaserverstärktem Kunststoff ausgebildet.

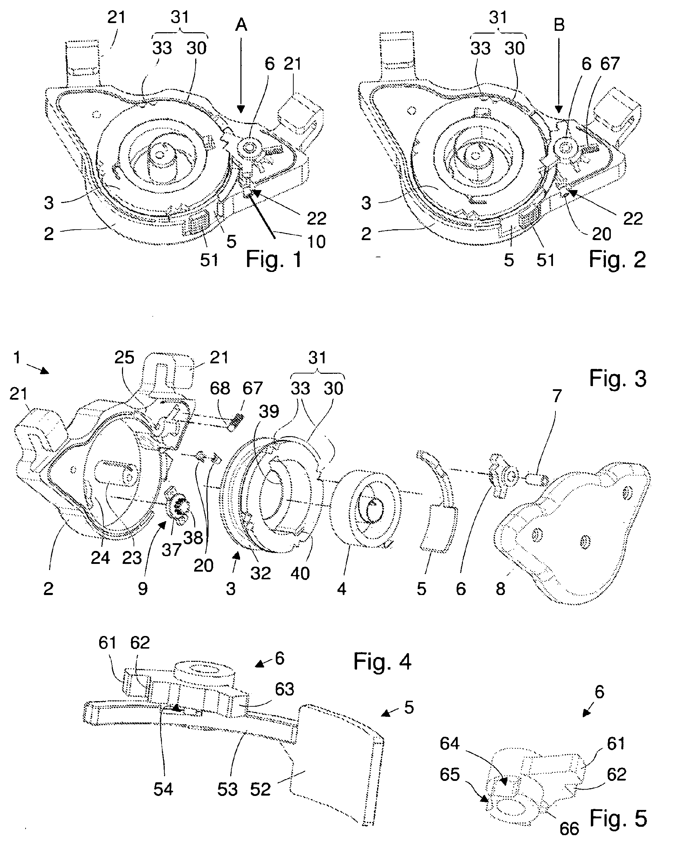

Eine Übersicht des Aufbaus einer Spannvorrichtung 1 gemäß einem ersten Ausführungsbeispiel geht aus Fig. 1 bis 3 hervor. Die Spannvorrichtung 1 weist ein Gehäuse auf, das beispielsweise von zwei Teilen gebildet wird, nämlich einem Gehäuseboden 2 und einem Deckel 8 - wobei letzterer in Fig. 1 und 2 entfernt ist, um die Anordnung der inneren Komponenten zu zeigen. Die Gehäuseteile 2 und 8 sind beispielsweise durch Nieten (nicht gezeigt) miteinander fest verbunden. An dem Gehäuse, hier am Bodenteil 2, sind Halteelemente vorgesehen, z.B. in Form von Haken 21, die in den gezeigten Ausführungsformen mit dem Gehäuse einstückig ausgebildet sein können. Mittels der Haken 21 kann die Spannvorrichtung wie bereits erwähnt an einer Außenkette (oder gegebenenfalls anderem Teil) der Gleitschutzkette befestigt werden, in der Regel durch unmittelbares Einhängen der Haken in Kettenglieder der Außenkette, was eine unverschiebliche und doch lösbare Befestigung gestattet. Die Haken 21 sind vorteilhafter Weise zu derselben Seite der Spannvorrichtung 1 (hier z.B. nach vorne) orientiert, um das Einhängen in die Kette zu erleichtern. Beispielsweise ist je ein Haken 21 an der oberen Schmalseite der beiden Flügelteile der Spannvorrichtung 1 ausgebildet. Das bereits erwähnte Spannseil 10 verläuft durch eine Öffnung 22 im Gehäuse; der im Inneren der Spannvorrichtung 1 befindliche Teil des Spannseils 10 ist auf einem Wickelrad 3 aufgerollt. Die Öffnung 22 kann, um Verschleiß durch das Spannseil hintanzuhalten, durch eine Hülse 20 verstärkt werden, hier durch zwei Hülsenhälften gebildet. Der aus der Spannvorrichtung ragende Teil des Spannseils 10 ist in Fig. 1 symbolisch gezeigt, während der aufgewickelte Teil unter dem Oberrand des Wickelrads verborgen ist; in Fig. 2 und 3 ist das Spannseil nicht gezeigt.

Bei der in Fig. 1 und 2 gezeigten Darstellung der Spannvorrichtung 1 mit abgenommenen Deckel ist sogleich das Wickelrad 3 mit einem Zahnkranz 31, welcher in der gezeigten Ausführungsform "vorderseitig" (d.h. an der in dieser Darstellung dem Betrachter zugewandten Seite des Wickelrads) angeordnet ist, und einer mit dem Zahnkranz zusammenwirkenden Sperrklinke 6 erkennbar. Mittels eines Betätigungsgliedes 5, das über einen aus einer anderen Öffnung des Gehäuses ausgeführten Knopf 51 betätigbar ist, kann je nach Bedarf festgelegt werden, in welche gewünschte Richtung das Spannseil 10 freigegeben ist, während zugleich eine Bewegung in die entgegen gesetzte Richtung blockiert ist. So ist in Fig. 1 jene Stellung A ("Fahrbetriebsstellung") gezeigt, in der das Spannseil 10 eingezogen werden kann, während ein Herausziehen des Seiles (entsprechend einer Drehung des Wickelrads in Spannrichtung) blockiert ist und nur über eine kleine Länge desselben erfolgen kann; diese Stellung kommt während des Betriebs der Gleitschutzkette 101 wie in Fig. 6 gezeigt zum Einsatz. Fig. 2 dagegen zeigt die Stellung B ("Montagestellung"), in der das Spannseil 10 ausgezogen werden kann, während ein Einziehen (Aufwickeln) des Seiles blockiert ist und nur über eine kleine Länge erfolgen kann. Diese Montagestellung wird beim Aufziehen der Gleitschutzkette 101 auf einen Reifen 100 verwendet, um zu ermöglichen, dass die nötige Länge des Spannseils gewählt werden kann und während des Anordnens auf dem Rad nicht ständig gegen die Vorspannung des Wickelrads gehalten werden muss.

Wie in Fig. 3 erkennbar ist, weist das Wickelrad 3 einen Körper 32 auf, der als Seilrolle zum Aufwickeln des Spannseiles 10 dient, sowie einen mit diesem drehfest verbundenen Zahnkranz 31, der eine weiter unten näher erläuterte Zahnung 33 aufweist. Die Seilrolle 32 wird mit einer Feder 4, die einerseits an einem Mittelzapfen 23 des Gehäusebodens 2 und andererseits an der Seilrolle (eingehakt in eine Ausnehmung 40 in der Innenseite der Seilrolle 32) befestigt ist, in Aufwickelrichtung vorgespannt. Die Feder 4 ist beispielsweise eine Spiralfeder und ist in den Zeichnungen vereinfacht dargestellt.

Wieder Bezug nehmend auf Fig. 1 und 2 ist eine Klinke 6 im Gehäuse neben dem Zahnkranz 31 in einem der beiden Flügelteile der Spannvorrichtung angeordnet. Die Klinke 6 ist innerhalb des Gehäuses um eine Führungshülse 7 drehbar gelagert, die zwischen den Gehäuseteilen 2 und 8 befestigt ist. Die Klinke 6 weist zwei Stellungen A, B auf, die wie bereits erwähnt jeweils einer Blockierposition entsprechen und mit dem Betätigungsglied 5 einstellbar sind. In jeder Stellung kann die Klinke eine Endposition einnehmen, in der die Klinke jeweils in die Zahnung 33 des Zahnkranzes 31 eingreift; dabei wirkt die Zahnung über Zahnflanken eines Typs (nämlich in Fig. 1 mit den im Uhrzeigersinn orientierten Flanken, in Fig. 2 jenen gegen den Uhrzeigersinn) über jeweils eine oder mehrere der Zahnflanke entsprechenden Auflaufflächen 61, 62, 63 (Fig. 4) an der Außenseite der Klinke zusammen. Mittels der Klinke 6 wird die Richtung festgelegt, in welche die Seilrolle bewegbar ist, während sie in der jeweiligen Gegenrichtung sperrt. Dabei werden beide Flanken der Zähne des Zahnkranzes 31 zum wahlweisen Hemmen der Seilbewegung genützt. Dazu können die Zähne wie in den gezeigten Ausführungsformen symmetrisch sein, was die Konstruktion zusätzlich vereinfacht.

Die Klinke weist vorteilhafter Weise zwei oder mehr Auflaufflächen 61, 62 auf, die bei der Blockierung des Herausziehens des Seiles zum Einsatz kommen. Hierbei wirkt jede Auflauffläche mit jeweils einer Zahnflanke des Zahnkranzes 31 zusammen. Der Einsatz von zwei oder mehr Auflaufflächen in der Fahrbetriebsstellung vergrößert die Fläche, über die eine Kraftübertragung erfolgen kann und ergibt eine bessere Verteilung der wirkenden Kräfte. Dies erhöht die Betriebssicherheit der Spannvorrichtung während des Einsatzes.

Die Klinke 6 wird in der jeweiligen Stellung A, B durch ein federndes Halteelement 67 gehalten. Dieses Halteelement sorgt zugleich für das nötige Spiel der Klinke 6, um die Bewegung des Zahnkranzes in die zugelassene Richtung zu gewähren. Beispielsweise ist als Halteelement 67 eine Feder (z.B. Spiralfeder) vorgesehen, durch die eine Kugel 68 gegen die Rückseite der Klinke 6 gedrückt wird. Dort befinden sich zwei Vertiefungen 64, 65 (Fig. 5), die jeweils einer Stellung A, B entsprechen. Mithilfe des Betätigungsgliedes 5 kann die Klinke 6 zwischen diesen beiden Stellungen umgestellt werden.

Bei der Bewegung des Spannseiles in der zugelassenen Richtung hebt der Zahnkranz 31 bei jeder Zahnposition jeweils die eingreifende Auflauffläche(n) 61, 62, 63 der Klinke 6 ein wenig an, die bei weiterer Drehung des Zahnkranzes 31, sobald der nächste Zahnraum erreicht wird, in diesen durch die Federkraft des Halteelements 67 zurückspringt. In der Gegenrichtung dazu ist die Bewegung dagegen selbsthemmend blockiert, weil der Zahnkranz über die jeweilige(n) Auflaufflanke(n) auf der Gegenfläche der Klinke abstützt und so die Bewegung hemmt.

Gemäß der Erfindung weist der Zahnkranz 31 des Wickelrads 3 nicht an seinem gesamten Umfang eine Zahnung auf, sondern nur in einen oder mehreren Umfangsabschnitten 33. Hierbei wird unter Zahnung eine Strukturierung des Umfangs durch Zähne bzw. Zahnräume verstanden. Im Rahmen dieser Offenbarung wird unter Zahn eine nach außen (d.h. vom Mittelpunkt des Wickelrads weg) vorspringende Struktur mit je einer in die Aufwickelrichtung und in die Spannrichtung orientierten Flanke verstanden, und ein Zahnraum eine nach innen (d.h. zum Mittelpunkt hin) vertiefte Struktur mit je einer in die Aufwickelrichtung und in die Spannrichtung orientierten Flanke; zwei direkt benachbarte Zähne bilden mit ihren einander zugewandten Hälften jeweils einen Zahnraum, und umgekehrt. Ein Zahn bzw. ein Zahnraum bildet jeweils eine Einheit der Zahnung ("Zahnungsteilung").

In zumindest einem weiteren Umfangsabschnitt 30 ist der Zahnkranz frei von Zahnung, d.h. er ist dort ohne eine in Umfangsrichtung verlaufende Struktur ("glatt" oder "zahnlos"; dies schließt eine Strukturierung in Richtung parallel zur Achse nicht aus). In der gezeigten Ausführungsform sind beispielsweise vier Abschnitte 33 mit Zähnen vorgesehen, die von vier "glatten" Abschnitten 30 getrennt sind. Die Abschnitte 33 sind vorteilhafter Weise gleichmäßig auf dem Zahnkranz angeordnet. Der Abstand zwischen den gezähnten Abschnitten 33 (= Ausdehnung der "glatten" Abschnitte 30) kann somit von der Größe des Zahnkranzes abhängen. In diesem Ausführungsbeispiel besteht jeder gezähnte Abschnitt 33 aus zwei Zahnungsteilungen, nämlich zwei Zahnräumen. Im Allgemeinen umfassen die gezähnten Abschnitte 33 eine oder mehrere Zahnungsteilungen, wobei die Zahl der Zahnungsteilungen vorzugsweise der Zahl der (den Zahnflanken entsprechend geformten) Auflaufflächen 61, 62 entspricht, die in der Fahrbetriebsstellung A zum Einsatz kommen.

Wenn nach dem Aufspannen der Gleitschutzkette 101 auf einen Reifen die erfindungsgemäße Spannvorrichtung 1 in die Fahrbetriebstellung gemäß Fig. 1 gebracht wird, wird das Spannseil 10 stufenlos soweit eingezogen, bis die Außenkette 104 gespannt ist. Hierbei wird sich in der Spannvorrichtung 1 die Klinke 6 auf einem glatten Abschnitt 30 befinden. Wenn nun auf das Spannseil Zug kommt, kann das Wickelrad 3 nachgeben, wobei die Klinke 6 auf dem glatten Abschnitt 30 gleitet; dies geschieht, bis ein gezähnter Abschnitt 33 erreicht wird, in dem Klinke 6 dann eine weitere Drehung in Spannrichtung blockiert. Somit kann die Gleitschutzkette 101 in größeren Schritten gespannt werden, als es einer einzelnen Zahnungsteilung entsprechen würde. Auf diese Weise ergibt sich ein vergrößertes Spiel beim Spannen der Außenkette 104, und es ist gewährleistet, dass die Gleitschutzkette 101 ausreichend locker auf dem Reifen sitzt, ohne Schaden zu verursachen. Dennoch ist eine Umdrehbewegung blockiert, nämlich ein Nachgeben des Wickelrads im Ausmaß von mehr als einer Umdrehung bzw. eines dem Ausmaß eines zahnlosen Abschnitts entsprechenden Teils einer Umdrehung.

Wie bereits erwähnt erfolgt das Umstellen der Klinke 6 zwischen den beiden Stellungen mithilfe des Betätigungsglieds 5. Gemäß Fig. 4 besteht das Betätigungsglied aus einem Schild 52, auf dem der Knopf 51 (Fig. 1 und 2) angebracht ist, und einem Arm 53, die zusammen eine einheitlich gekrümmte Form haben. Das Betätigungsglied 5 wird im Gehäuseunterteil 2 in einer Vertiefung 25 eingesetzt, die in einer um das Wickelrad 3 umlaufenden Richtung verläuft. Die gekrümmte Formgebung des Betätigungsglieds ermöglicht das Hin- und Herschieben in der Vertiefung 25, wobei der Schild 52 die Öffnung im Gehäuse nach innen verschließt. Der Arm 53 erstreckt sich unterhalb der Klinke 6 (entlang der Achse der Klinke gesehen) und ist mit dieser über eine Gelenkverbindung gekoppelt. Hierzu weist die Klinke 6 eine Nase 66 (oder Zapfen) auf, die zusammen mit einer entsprechenden Öffnung 54 in dem Arm 53 z.B. eine Zapfenverbindung bildet; selbstverständlich könnten diese Elemente auch umgekehrt angeordnet sein. Je nach Stellung des Knopfes 51 ist die Öffnung 54 und somit die Nase 66 nach verschiedenen Seiten der Klinke 6 orientiert - in Fig. 4 links bzw. rechts der Achse der Klinke -, wodurch die Klinke in eine der beiden Stellungen A und B gestellt werden kann (vgl. Fig. 1 und 2). Diese Ausbildung der Betätigung der Klinkenstellung über ein als Schieber arbeitendes Betätigungsglied 5 zeichnet sich durch besondere Robustheit und verringert das Risiko der Beschädigung durch Verschmutzungen.

Wie außerdem in Fig. 3 erkennbar ist, weist die Spannvorrichtung ein Bremselement 9 auf, das als Dämpfungseinrichtung dient. Das Bremselement 9 sorgt für ein ruhiges Einziehen des Spannstranges und verhindert, dass besonders beim Einziehen einer größeren Stranglänge eine hohe Einzugsgeschwindigkeit erreicht wird, was zu einer Verletzungsgefahr für den Benutzer führt, wie z.B. Schneid- oder Schlagverletzungen (durch das Strangende) an Fingern.

Das Bremselement 9 weist ein Radelement in Form eines Zahnrads 37 auf, das mit einem zweiten Zahnkranz ("Bremszahnkranz") 39 des Wickelrads 3 zusammenwirkt. Vorzugsweise ist der Bremszahnkranz 39 als Innenzahnkranz ausgebildet, und das Bremselement 9 ist in einer Weise gelagert, dass sich seine Achse innerhalb des Umfangs des Wickelrads exzentrisch zu dieser befindet, wobei das Zahnrad 37 in den Bremszahnkranz 39 eingreift. Eine Drehung des Wickelrads 3 wird somit in eine Drehung des Zahnrads 37 umgesetzt. Der Körper 38 des Bremselements ist in einer Ausnehmung 24 in dem Gehäuseboden 2 gelagert. Einer Drehung des Zahnrads 37 setzt das Bremselement einen Widerstand entgegen, derart, dass es eine Bremswirkung bei einer gewissen Geschwindigkeit der Rollendrehung erzeugt. Die Bremswirkung tritt bei Bewegungen in beide Richtungen ein, sodass sowohl ein zu schnelles Abrollen als auch ein zu schnelles Einziehen des Spannseiles 10 abgebremst wird. Weitere Details und Ausführungen des Bremselements können der eingangs erwähnten EP 1 935 674 A1 der Anmelderin entnommen werden.

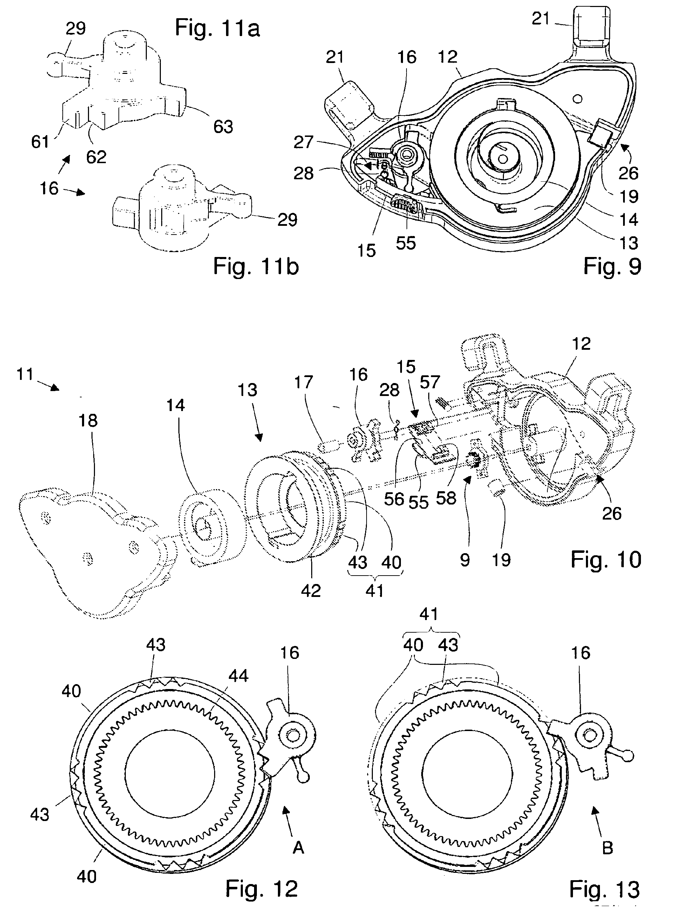

Ein zweites Ausführungsbeispiel einer erfindungsgemäßen Spannvorrichtung 11 ist in den Fig. 9 bis 13 gezeigt. In dieser Realisierung sind die Sperrklinke und der zugehörende Zahnkranz "hinterseitig" angeordnet, d.h. auf der der Bodenteil des Gehäuses zugewandten Seite des Wickelrads. Im Folgenden werden die Komponenten der Spannvorrichtung übersichtsweise diskutiert, wobei auf die Unterschiede zum ersten Ausführungsbeispiel näher eingegangen wird; im Übrigen gilt das oben zur ersten Ausführungsform Erläuterte.

Eine Übersicht des Aufbaus der Spannvorrichtung 11 geht aus Fig. 9 und 10 hervor. Die Spannvorrichtung 11 weist auch in diesem Fall ein zweiteiliges Gehäuse auf, das aus einem Gehäuseboden 12 und einem Deckel 18 besteht (der Deckel 18 ist wiederum in Fig. 9 abgenommen). Das Spannseil 10 ist durch eine mit einer (hier einteiligen) Hülse 19 verstärkte Öffnung 26 ins Gehäuse zu einem Wickelrad 13 geführt, an dem im Inneren der Spannvorrichtung 11 befindliche Teil des Spannseils 10 aufgerollt ist.

Das Wickelrad 13 weist einen Zahnkranz 41 auf seinem als Seilrolle 42 zum Aufwickeln des Spannseiles 10 dienenden Körper auf. Die Seilrolle 42 bzw. das Wickelrad 13 wird mit einer Feder 14 in Aufwickelrichtung vorgespannt. Die Feder 14 ist vorzugsweise wie die Feder 4 des vorigen Ausführungsbeispiel ausgeführt. Anders als im vorigen Ausführungsbeispiel befindet sich der Zahnkranz 41 auf jener Seite des Wickelrads, die im eingebauten Zustand dem Gehäuseboden zugewandt ist. Somit ist in der Darstellung der Fig. 9 der Zahnkranz 41 von dem Körper des Wickelrads verdeckt. Außerdem weist das Wickelrad 3 einen Bremszahnkranz 44 auf, der mit einem in der Spannvorrichtung 11 vorgesehenen Bremselement 9 zusammenwirkt, das auch in dieser Ausführungsform als Dämpfungseinrichtung dient.

Der Zahnkranz 41 des Wickelrads 13 weist eine Zahnung lediglich in Umfangsabschnitten 43 auf. In anderen Umfangsabschnitten 40 ist der Zahnkranz frei von Zahnung. In der gezeigten Ausführungsform sind beispielsweise vier Abschnitte 43 mit je drei Zähnen und vier Zahnräumen vorgesehen, die von vier "glatten" Abschnitten 40 getrennt sind, vgl. Fig. 11 und 12. Die Abschnitte 43 sind vorteilhafter Weise gleichmäßig auf dem Zahnkranz angeordnet.

Eine Sperrklinke 16 ist im Gehäuse neben dem Wickelrad 13 angeordnet. Die Klinke 16 ist wie beim vorigen Ausführungsbeispiel um eine Führungshülse 17 drehbar gelagert, jedoch gewissermaßen "umgekehrt" orientiert, infolge der hinterseitigen Anordnung des Wickelrad-Zahnkranzes. Mit dem Betätigungsglied 15, das einen von außen zugänglichen Knopf 55 aufweist und mittels diesem bedient werden kann, kann die Klinke zwischen zwei Stellungen A, B gestellt werden, die jeweils in Fig. 11 und 12 gezeigt sind.

Bezugnehmend auf Fig. 11a weist die Klinke Auflaufflächen auf, die bei der Blockierung des Herausziehens des Seiles zum Einsatz kommen, indem diese mit jeweils einer Zahnflanke des Zahnkranzes 41 zusammenwirken. Bezugnehmend auf Fig. 11b weist die Klinke 16 zwei Vertiefungen auf, die mit einem federnden Halteelement zusammenwirken und dem federnden Halten der Klinke in je einer der Stellungen A, B dienen. Diese Formgebung entspricht der Klinke 6 der ersten Ausführungsform (vgl. Fig. 5).

Wie anhand der Fig. 12 und 13 erkennbar ist, werden mithilfe der Klinke 16 zwei Stellungen A, B realisiert, die jeweils einer Blockierposition entsprechen und in Funktionsprinzip und Wirkung den Stellungen A, B der Fig. 1 und 2 übereinstimmen. In jeder Stellung kann die Klinke 16 eine Endposition einnehmen, in der die Klinke jeweils in die Zahnung 43 des Zahnkranzes 41 eingreift; dabei wirkt die Zahnung über Zahnflanken eines Typs über jeweils eine oder mehrere der Zahnflanke entsprechenden Auflaufflächen 61, 62, 63 an der Außenseite der Klinke zusammen. Mithilfe der Klinke 16 wird die Richtung festgelegt, in welche die Seilrolle bewegbar ist, während sie in der jeweiligen Gegenrichtung sperrt. Dabei werden beide Flanken der Zähne des Zahnkranzes 41 - genauer der gezähnten Abschnitte 43 - zum wahlweisen Hemmen der Seilbewegung genützt. Dazu können die Zähne wie in den gezeigten Ausführungsformen symmetrisch sein, was die Konstruktion zusätzlich vereinfacht.

Das Betätigungsglied 15 der Spannvorrichtung 11 besteht im Wesentlichen aus einem Schild 56, auf dessen Außenseite der bereits erwähnte Knopf 55 (Fig. 9) angebracht ist. Das Betätigungsglied 15 ist durch seinen Schild 56 ist in dem Gehäuseboden 12 in einem inneren Raum 27, der in dem Flügelteil der Spannvorrichtung vorgesehen ist, verschieblich gelagert, und wird dort in seiner Position mittels einer Drahtfeder 28 gehalten. An der nach innen gewandten Seite des Schilds 56 sind an jedem Ende je eine Stoppfläche 57, 58 ausgebildet. Diese wirken mit einem Arm 29 der Sperrklinke 16 zusammen. Das Betätigungsglied kann mittels des Knopfes 55 nach links bzw. rechts verschoben werden; hierbei wirkt jeweils eine der Stoppflächen 57, 58 auf den Arm 29 und kippt die Sperrklinke 16 in die jeweils zugehörende der beiden Stellungen A und B.

Die Öffnung 26, durch die das Spannseil 10 aus der Spannvorrichtung 11 austritt, befindet sich bei der Spannvorrichtung 11 in jenem Flügelteil, der jenem Flügelteil, in dem das Betätigungsglied 15 und die Sperrklinke 16 untergebracht sind, gegenüber liegt; dies verringert die Gefahr von Verletzungen durch das Spannseil 10 für den Benutzer bei der Handhabung der Gleitschutzkette. Eine derartige Anordnung könnte natürlich auch bei der Spannvorrichtung 1 der Fig. 1 bis 3 gewählt werden; tatsächlich ist es einleuchtend, dass die Wahl des Ortes der Öffnung unabhängig davon ist, ob der mit der Sperrklinke 16 zusammenwirkende Zahnkranz 41 vorder- oder hinterseitig des Wickelrads 13 angeordnet ist.

## Patentansprüche

1. Spannvorrichtung (1, 11) für eine Gleitschutzkette mit einem Gehäuse (2, 8; 12, 18), einem Wickelrad (3, 13) und einer diesem zugeordneten Sperrklinke (6, 16), wobei das Wickelrad (3, 13) innerhalb des Gehäuses um seine Achse drehbar gelagert und in Aufwickelrichtung vorgespannt ist und einen Zahnkranz (31, 41) mit einer entlang seinem Umfang angeordneten Zahnung (33, 43) aufweist, sowie ein durch eine Gehäuseöffnung in das Gehäuse einziehbarer Spannstrang (10) an das Wickelrad (3, 13) anschließbar ist, wobei die Sperrklinke (6, 16) in einer ersten Stellung (A) eine Umdrehbewegung des Wickelrads in Spannrichtung durch Eingreifen der Sperrklinke (6, 16) in die Zahnung (33, 43) des Zahnkranzes (31, 41) blockiert,
**dadurch gekennzeichnet, dass**
auf dem Umfang des Zahnkranzes (31, 41) des Wickelrads zumindest ein Bereich (30, 40) ausgebildet ist, der frei von einer Zahnung ist und zwischen daran anschließenden Zahnungen liegt.

2. Spannvorrichtung nach Anspruch 1, **dadurch gekennzeichnet, dass** der Zahnkranz (31, 41) auf seinem Umfang zumindest zwei zahnungsfreie Bereiche (30, 40) aufweist, die eine gleiche Anzahl von Bereichen (33, 43) trennen, die vorzugsweise jeweils eine gleichbleibende Anzahl von Zahnungsteilungen aufweisen.

3. Spannvorrichtung nach Anspruch 1 oder 2, **gekennzeichnet durch** ein von außen zugängliches Betätigungsglied (5), welches über einen Arm (53) auf die Sperrklinke (6) wirkt, wodurch die Sperrklinke (6) zwischen der ersten Stellung (A), in der sie eine Umdrehbewegung des Wickelrads in Spannrichtung blockiert, und einer zweiten Stellung (B), in der diese Bewegung freigegeben ist, bewegbar ist, wobei der Arm des Betätigungsglieds über eine gelenkige Verbindung mit der Sperrklinke (6) angekoppelt ist.

4. Spannvorrichtung nach Anspruch 3, **dadurch gekennzeichnet, dass** der Arm sich außerhalb des Wickelrads (3) entlang einer um das Wickelrad verlaufenden Richtung erstreckt und in Richtung der Achse des Wickelrads (3) gesehen unterhalb der Sperrklinke angeordnet ist.

5. Spannvorrichtung nach Anspruch 3 oder 4, **dadurch gekennzeichnet, dass** die gelenkige Verbindung eine Zapfenverbindung ist, die durch eine Öffnung (54) und einen in diese Öffnung eingreifenden Zapfen (66) gebildet ist, die auf der Sperrklinke bzw. dem Arm vorgesehen sind.

6. Spannvorrichtung nach Anspruch 1 oder 2, **gekennzeichnet durch** ein von außen zugängliches Betätigungsglied (15), welches an einer Innenseite zwei Stoppflächen (57, 58) aufweist, wobei die Sperrklinke (16) einen Arm (29) aufweist, der sich zwischen den zwei Stoppflächen befindet und je nach Bewegung des Betätigungsglieds von den Stoppflächen kippbar ist, wobei infolge dieser Kippbewegung die Sperrklinke (16) zwischen der ersten Stellung (A), in der sie eine Umdrehbewegung des Wickelrads in Spannrichtung blockiert, und einer zweiten Stellung (B), in der diese Bewegung freigegeben ist, bewegbar ist.

7. Spannvorrichtung nach einem der Ansprüche 3 bis 6, **dadurch gekennzeichnet, dass** die Sperrklinke in der zweiten Stellung (B) ebenfalls auf den Zahnkranz (31, 41) wirkt, jedoch eine Umdrehbewegung des Wickelrads in Aufwickelrichtung durch Eingreifen der Sperrklinke (6, 16) in die Zahnung (33,43) blockiert.

8. Spannvorrichtung nach einem der vorangehenden Ansprüche, **gekennzeichnet durch** eine Dämpfungseinrichtung (9), die ein mit dem Wickelrad (3, 13) getriebemäßig verbundenes Radelement (37) aufweist, das seiner Drehung, zumindest in einer Aufwickelrichtung des Wickelrads (3, 13) entsprechenden Richtung, eine Bremswirkung entgegensetzt, wobei das Radelement (37) vorzugsweise ein Zahnrad ist, das mit einem Zahnradkranz (39, 44), insbesondere Innenzahnkranz, des Wickelrads (3) zusammenwirkt.

9. Gleitschutzkette für ein Fahrzeugrad mit einer Spannvorrichtung nach einem der vorangehenden Ansprüche.

10. Gleitschutzkette nach Anspruch 9, **dadurch gekennzeichnet, dass** die Spannvorrichtung (1, 11) mit an dem Gehäuse angeordneten Halteelementen, insbesondere Haken (21), an einem Außenstrang (104) der Gleitschutzkette unverschieblich befestigbar ist.

## Claims

1. A tensioning device (1, 11) for an anti-skid chain, comprising a housing (2, 8; 12, 18), a winding wheel (3, 13) and a pawl (6, 16) associated thereto, wherein the winding wheel (3, 13) is mounted to be rotatable about its axis within the housing and is pretensioned in the winding direction, and has a gear ring (31, 41) with a toothing (33, 43) arranged along its circumference, and a tension cord (10) which can be retracted into the housing and can be connected to the winding wheel (3, 13), wherein in a first position (A), the pawl (6) blocks a rotary movement of the winding wheel in the tensioning direction by engaging the pawl (6) in the toothing (33, 43) of the gear ring (31, 41),
**characterized in that**
on the circumference of the gear ring (31, 41) of the winding wheel at least one region (30, 40) is formed which is without toothing and lies between toothing regions adjacent thereto.

2. The tensioning device according to claim 1, **characterized in that** on its circumference, the gear ring (31, 41) has at least two regions (30, 40) without toothing which separate an equal number of regions (33, 43) which preferably have in each case a constant number of toothing pitches.

3. The tensioning device according to claim 1 or claim 2, **characterized by** an actuation member (5) which is accessible from the outside and acts via an arm (53) on the pawl (6), whereby the pawl (6) can be moved between the first position (A), in which it blocks the rotary movement of the winding wheel in the tensioning direction, and a second position (B) in which this movement is released, wherein the arm of the actuation member is coupled to the pawl (6) via an articulated connection.

4. The tensioning device according to claim 3, **characterized in that** said arm extends outside of the winding wheel (3) along a direction running about the winding wheel and, viewed in the direction of the axis of the winding wheel (3), is arranged below the pawl.

5. The tensioning device according to claim 3 or claim 4, **characterized in that** the articulated connection is a pin connection which is formed by an opening (54) and a pin (66) engaging in said opening, and which is provided on the pawl or the arm.

6. The tensioning device according to claim 1 or claim 2, **characterized by** an actuation member (15) which is accessible from the outside and which has two stop faces (57, 58) on an inner side, wherein the pawl (16) has an arm (29) which is located between the two stop faces and can be tilted depending on the movement of the actuation member, wherein due to this tilting movement, the pawl (16) can be moved between the first position (A), in which it blocks the rotary movement of the winding wheel in the tensioning direction, and a second position (B) in which this movement is released.

7. The tensioning device according to any one of the claims 3 to 6, **characterized in that** in the second position (B), the pawl also acts on the gear ring (31, 41), but blocks a rotary movement of the winding wheel in the winding direction by engaging the pawl (6, 16) in the toothing (33, 43).

8. The tensioning device according to any one of the preceding claims, **characterized by** a damping device (9) which has a wheel element (37) which is connected to the winding wheel (3, 13) through a gear and which counteracts its rotation, at least in a direction corresponding to the winding direction of the winding wheel (3, 13), with a braking effect, wherein the wheel element (37) preferably is a gear wheel which interacts with a gear ring (39, 44), in particular an inner gear ring, of the winding wheel (3).

9. An anti-skid chain for a vehicle wheel, comprising a tensioning device according to any one of the preceding claims.

10. The ant-skid chain according to claim 9, **characterized in that** the tensioning device (1, 11) can be non-slidably fastened to an outer cord (104) of the anti-skid chain by means of holding elements, in particular hooks (21), arranged on the housing.

## Revendications

1. Dispositif de serrage (1, 11) pour une chaîne antidérapante comportant un boîtier (2, 8 ; 12, 18), une roue d'enroulement (3, 13) et un cliquet d'arrêt (6, 16) associé à cette dernière, sachant que la roue d'enroulement (3, 13) est logée à l'intérieur du boîtier de manière à pouvoir tourner autour de son axe et est précontrainte dans le sens d'enroulement et présente une couronne dentée (31, 41) dotée d'une denture (33, 43) disposée le long de sa périphérie, et sachant qu'un brin de serrage (10) pouvant être rentré dans le boîtier par une ouverture de boîtier peut être raccordé à la roue d'enroulement (3, 13), sachant que le cliquet d'arrêt (6, 16) bloque dans une première position (A) un mouvement de rotation de la roue d'enroulement dans le sens de serrage en ce que le cliquet d'arrêt (6, 16) vient en prise avec la denture (33, 43) de la couronne dentée (31, 41),
**caractérisé en ce**
**qu'**au moins une zone (30, 40) est réalisée sur la périphérie de la couronne dentée (31, 41) de la roue d'enroulement, laquelle zone est exempte de denture et se trouve entre des dentures s'y raccordant.

2. Dispositif de serrage selon la revendication 1, **caractérisé en ce que** la couronne dentée (31, 41) présente sur sa périphérie au moins deux zones exemptes de dentures (30, 40), lesquelles zones séparent un nombre identique de zones (33, 43) qui présentent de préférence respectivement un nombre constant de pas de denture.

3. Dispositif de serrage selon la revendication 1 ou 2, **caractérisé par** un organe d'actionnement (5) accessible depuis l'extérieur, lequel agit par l'intermédiaire d'un bras (53) sur le cliquet d'arrêt (6) ce qui permet au cliquet d'arrêt (6) de pouvoir se déplacer entre la première position (A), dans laquelle ledit cliquet d'arrêt bloque dans le sens de serrage une rotation de la roue d'enroulement, et une deuxième position (B), dans laquelle ce mouvement est débloqué, sachant que le bras de l'organe d'actionnement est accouplé au cliquet d'arrêt (6) par l'intermédiaire d'un assemblage articulé.

4. Dispositif de serrage selon la revendication 3, **caractérisé en ce que** le bras s'étend à l'extérieur de la roue d'enroulement (3) le long d'un sens s'étendant autour de la roue d'enroulement et est disposé, vu dans le sens de l'axe de la roue d'enroulement (3), sous le cliquet d'arrêt.

5. Dispositif de serrage selon la revendication 3 ou 4, **caractérisé en ce que** l'assemblage articulé est un assemblage à mortaise et à tenon, qui est formé par une ouverture (54) et un tenon (66) venant en prise avec ladite ouverture, lesquels sont prévus sur le cliquet d'arrêt ou sur le bras.

6. Dispositif de serrage selon la revendication 1 ou 2, **caractérisé par** un organe d'actionnement (15) accessible depuis l'extérieur, lequel présente sur un côté intérieur deux surfaces d'arrêt (57, 58), sachant que le cliquet d'arrêt (16) présente un bras (29) qui se trouve entre les deux surfaces d'arrêt et qui peut être basculé selon le mouvement de l'organe d'actionnement par les surfaces d'arrêt, sachant que suite à ce mouvement de basculement, le cliquet d'arrêt (16) peut être déplacé entre la première position (A), dans laquelle le cliquet d'arrêt bloque un mouvement de rotation de la roue d'enroulement dans le sens de serrage, et une deuxième position (B), dans laquelle ledit mouvement est débloqué.

7. Dispositif de serrage selon l'une quelconque des revendications 3 à 6, **caractérisé en ce que** le cliquet d'arrêt agit dans la deuxième position (B) également sur la couronne dentée (31, 41), bloque toutefois un mouvement de rotation de la roue d'enroulement dans le sens d'enroulement **en ce que** le cliquet d'arrêt (6, 16) vient en prise avec la denture (33, 43).

8. Dispositif de serrage selon l'une quelconque des revendications précédentes, **caractérisé par** un système d'amortissement (9) qui présente un élément de roue (37) relié à la roue d'enroulement (3, 13) de manière conforme à un engrenage, lequel élément de roue oppose à sa rotation une action de freinage au moins dans un sens correspondant à un sens d'enroulement de la roue d'enroulement (3, 13), sachant que l'élément de roue (37) est de préférence une roue dentée, qui coopère avec une couronne dentée (39, 44), en particulier une couronne dentée intérieure, de la roue d'enroulement (3).

9. Chaîne antidérapante pour une roue de véhicule comportant un dispositif de serrage selon l'une quelconque des revendications précédentes.

10. Chaîne antidérapante selon la revendication 9, **caractérisée en ce que** le dispositif de serrage (1, 11) peut être fixé de manière immobile sur un brin extérieur (104) de la chaîne antidérapante avec des éléments de maintien disposés sur le boîtier, en particulier avec des crochets (21).
